# EUROPEAN PATENT SPECIFICATION

(11) **EP 2 419 956 B1**
(45) Date of publication and mention of the grant of the patent: **06.06.2018**
(21) Application number: 10764923.8
(22) Date of filing: 06.04.2010
(51) Int. Cl.: H01M 10/04, H01G 9/00, B05D 1/00, H01M 2/20, H01M 6/46, H01G 9/012, H01G 9/15, H01M 10/052, H01M 10/0585

(54) **HIGH POWER, HIGH ENERGY AND LARGE AREA ENERGY STORAGE DEVICES**
HOCHENERGETISCHE GROSSFLÄCHIGE HOCHLEISTUNGSENERGIESPEICHERVORRICHTUNGEN
DISPOSITIFS DE STOCKAGE D'ÉNERGIE DE PUISSANCE ÉLEVÉE, D'ÉNERGIE ÉLEVÉE ET DE GRANDE SURFACE

(30) Priority: 13.04.2009 US 422739
(43) Date of publication of application: 22.02.2012
(73) Proprietor: Applied Materials, Inc., Santa Clara, CA 95054 (US)
(72) Inventor: KWAK, Byung-sung, Leo, Portland OR 97229 (US); KRISHNA, Nety, M., Sunnyvale CA 94087 (US); NALAMASU, Omkaram, San Jose CA 95138 (US); SINGH, Kaushal, K., Santa Clara CA 95051 (US); VERHAVERBEKE, Steven, San Francisco CA 94107 (US)
(74) Representative: Zimmermann & Partner Patentanwälte mbB
(86) International application number: PCT/US2010/030121
(87) International publication number: WO 2010/120601

(56) References cited:
- WO-A2-01/73957
- JP-A- 2008 293 793
- JP-A- 2008 293 793
- US-A1- 2003 152 815
- US-A1- 2004 131 897
- US-A1- 2005 079 418
- US-A1- 2009 035 664

## Description

### FIELD OF THE INVENTION

The present invention relates generally to thin film energy storage devices, and more particularly to large area energy storage devices with high power and high energy.

### BACKGROUND OF THE INVENTION

Energy storage devices include a wide range of devices such as batteries, thin film batteries (TFBs), capacitors, supercapacitors and ultracapacitors. These energy storage devices are used in a wide variety of applications including micro-power sources (for micro-sensors, smart cards, real time clocks, etc.) and larger power/energy sources (for cell phones, PDAs, laptops, power tools, transportation, heavy industry, power generation and transmission, complementary energy storage for renewable energy generation, etc.).

Despite a great deal of effort within industry and the scientific community, there remains a need to improve the following attributes of energy storage devices: the power delivery ability; the energy storage capacity; the large area scalability; and the manufacturability. Therefore, there is a need for concepts and methods that can significantly reduce the cost of manufacturing and the performance of energy storage devices.

### SUMMARY OF THE INVENTION

In general, embodiments of this invention provide readily manufacturable, high power, high energy, large area energy storage devices. The approach of the present invention includes, but is not limited to, the use of processes compatible with large area processing tools, such as large area coating systems. The approach of the present invention also includes, but is not limited to, the use of linear processing systems compatible with flexible thin film substrates. The energy storage devices may include batteries, supercapacitors and ultra-capacitors, whose basic structure is comprised of a positive electrode, a solid state electrolyte, and a negative electrode, and may also include negative and/or positive terminal current collectors. Embodiments of the energy storage devices described herein may be comprised of positive electrode materials with high charge capacity and high voltage capability, negative electrode materials with high charge capacity, and electrolytes with high electrochemical stability, high ionic conductivity and very low electrical conductivity.

According to aspects of the invention, a method of manufacturing an energy storage device, where the energy storage device includes a multiplicity of cells integrated on a substrate and the multiplicity of cells are electrically connected in serial, comprises: providing the substrate; depositing layers corresponding to a thin film energy storage device on the substrate, the layers including, in order of deposition, a current collector, a first electrode, an electrolyte and a second electrode; patterning the current collector to form a multiplicity of current collector stripes; patterning the first electrode to form a multiplicity of first electrode stripes, each of the first electrode stripes being on top of a corresponding one of the multiplicity of current collector stripes; and patterning the second electrode to form a multiplicity of second electrode stripes, each of the multiplicity of second electrode stripes corresponding to one of the multiplicity of first electrode stripes; wherein each of the multiplicity of electrically connected cells comprises one of the multiplicity of current collector stripes, the corresponding one of the multiplicity of first electrode stripes, the corresponding one of the multiplicity of second electrode stripes, and a corresponding portion of the layer of the electrolyte. The multiplicity of cells may be configured in a serial chain of cells, and the current collector stripe corresponding to one of the multiplicity of cells is electrically connected to the second electrode stripe corresponding to the cell adjacent to the one of the multiplicity of cells.

According to further aspects of the invention, a second method of manufacturing an energy storage device, where the energy storage device includes a plurality of cells integrated on a substrate and the plurality of cells are electrically connected in serial and in parallel, comprises: providing the substrate; depositing layers corresponding to a thin film energy storage device on the substrate, the layers including, in order of deposition, a current collector, a first electrode, an electrolyte and a second electrode; patterning the current collector to form a multiplicity of current collector stripes; patterning the first electrode to form a plurality of first area electrodes on the multiplicity of current collector stripes, the plurality of first area electrodes being formed in a multiplicity of first area electrode rows, each of the multiplicity of first area electrode rows corresponding to a different one of the multiplicity of current collector stripes; and patterning the second electrode to form a multiplicity of second electrode stripes, each of the multiplicity of second electrode stripes corresponding to a different one of the multiplicity of first electrode stripes; wherein each of the plurality of cells comprises one of the plurality of first area electrodes, and corresponding portions of current collector stripe, second electrode stripe, and electrolyte layer.

According to yet further aspects of the invention, an energy storage device includes a multiplicity of thin film cells formed on a single substrate, the multiplicity of cells being electrically connected in series, each one of the multiplicity of cells comprising: a current collector on the surface of the substrate; a first electrode on the current collector; a second electrode over the first electrode; and an electrolyte layer between the first electrode and the second electrode. A first one of the multiplicity of cells and a second one of the multiplicity of cells are electrically connected in series by the current collector stripe corresponding to the first one of the cells being electrically contacted to the second electrode stripe corresponding to the second one of the cells, and wherein the first one of the cells is adjacent to the second one of the cells on the substrate.

According to further aspects of the invention, a second energy storage device includes a plurality of thin film cells formed on a single substrate, the plurality of cells being electrically connected in a network, the network including both parallel and serial electrical connections between individual cells of the plurality of cells, the plurality of cells comprising: a multiplicity of current collector stripes on the surface of the substrate, the multiplicity of current collector stripes being mutually parallel; a plurality of first cell electrodes on the multiplicity of current collector stripes, the plurality of first cell electrodes corresponding to the plurality of cells; a multiplicity of second electrode stripes over the plurality of first cell electrodes, the multiplicity of second electrode stripes being parallel to the multiplicity of current collector stripes; and an electrolyte layer between the plurality of first cell electrodes and the multiplicity of second electrode stripes. The multiplicity of current collector stripes may provide parallel electrical connection of the plurality of cells. The plurality of cells may comprise rows of cells, and the rows of cells may be electrically connected in series with each other.

### BRIEF DESCRIPTION OF THE DRAWINGS

These and other aspects and features of the present invention will become apparent to those ordinarily skilled in the art upon review of the following description of specific embodiments of the invention in conjunction with the accompanying figures, wherein:
FIG. 1 is a representation of a reel-to-reel tool set-up for fabrication of energy storage devices on large area substrates, according to some embodiments of the present invention;
FIG. 2 is a schematic diagram of battery cells connected in series;
FIG. 3 is a representation of battery cells on a large area substrate, corresponding to the schematic diagram of FIG. 2, according to some embodiments of the present invention;
FIG. 4 is a schematic diagram of battery cells connected both in series and parallel, according to some embodiments of the present invention;
FIG. 5 is a representation of battery cells on a large area substrate, corresponding to the schematic diagram of FIG. 4, according to some embodiments of the present invention;
FIGs. 6A to 6H illustrate an energy storage device fabrication process, according to some embodiments of the present invention;
FIG. 7 is a schematic diagram of part of the battery cell network of FIG. 4;
FIG. 8 shows a top view of patterned cathode current collector and cathode layers corresponding to the structure of FIGs. 6B and 7, according to some embodiments of the present invention;
FIG. 9 is a cross-section of an energy storage device showing series electrical connection of energy storage cells, according to some embodiments of the present invention; and
FIG. 10 is a schematic representation of a process line for fabrication of energy storage devices, according to some embodiments of the present invention.

### DETAILED DESCRIPTION

Embodiments of the present invention will now be described in detail with reference to the drawings, which are provided as illustrative examples of the invention so as to enable those skilled in the art to nractice the invention. Notablv. the figures and examples below are not meant to limit the scope of the present invention to a single embodiment, but other embodiments are possible by way of interchange of some or all of the described or illustrated elements. Moreover, where certain elements of the present invention can be partially or fully implemented using known components, only those portions of such known components that are necessary for an understanding of the present invention will be described, and detailed descriptions of other portions of such known components will be omitted so as not to obscure the invention. In the present specification, an embodiment showing a singular component should not be considered limiting; rather, the invention is intended to encompass other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present invention encompasses present and future known equivalents to the known components referred to herein by way of illustration.

Energy storage devices are described generally herein, and specific examples of TFB devices are provided. However, concepts of the present invention are not limited to TFBs, but are applicable to energy storage devices generally, including batteries, TFBs, capacitors, supercapacitors and ultracapacitors. Furthermore, specific examples of large area TFBs are provided. However, concepts of the present invention are not limited to large area energy storage devices, but are applicable to energy storage devices generally, including micro-power sources (for micro-sensors, smart cards, etc.), larger power/energy sources (for cell phones, PDAs, laptops, power tools, etc.), and large format energy storage devices (meter-scale devices for mounting behind solar panels, for example).

The energy storage devices are formed on substrates. Specific examples of flexible large area substrates, suitable for reel-to-reel processing, are provided. However, concepts of the present invention are not limited to large area substrates, but are applicable to energy storage devices formed on a wide range of substrates, including semiconductor substrates, large area substrates, flexible large area substrates, conducting/metallic and dielectric substrates, etc.

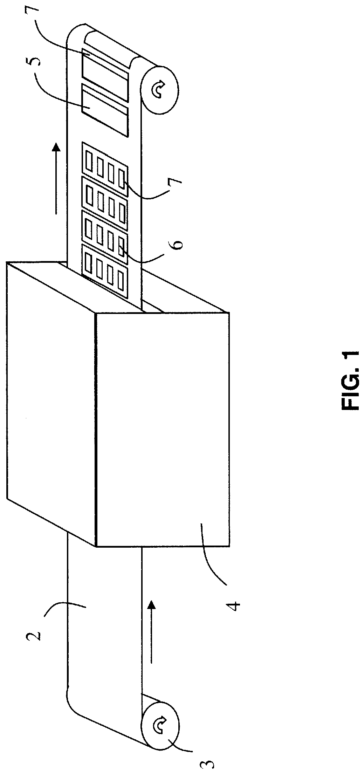

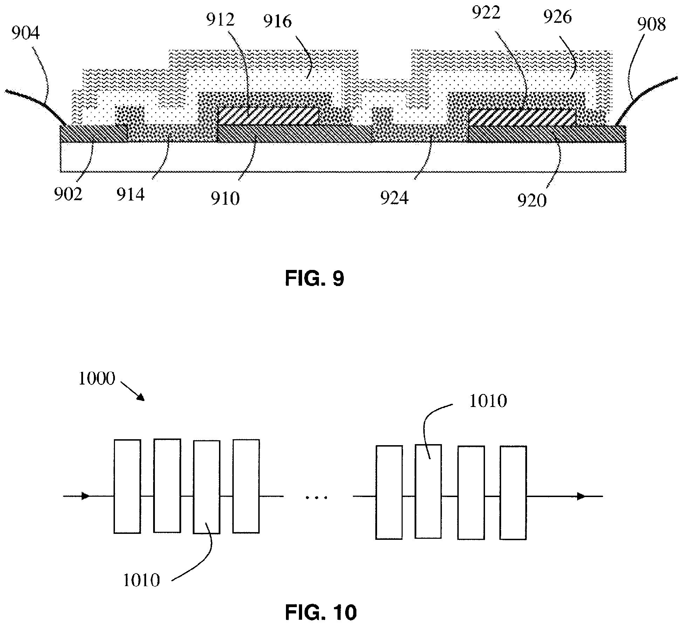

Figure 1 is a representation of a reel-to-reel tool set-up for fabrication of thin film energy storage devices on large area substrates, according to some embodiments of the present invention. A flexible large area substrate 2 is mounted on reels 3 and is moved through a processing tool 4, as indicated. The processing tool 4 may include deposition equipment, such as a large area coater, and patterning equipment. For ease of illustration, only one processing tool is shown; however, multiple processing tools may be used on the same reel-to-reel tool set-up. See Figure 10. The energy storage devices may comprise large numbers of energy storage device cells fabricated on the substrate 2. The energy storage device cells may be formatted as stripes across the width of the substrate. For example, cathode stripes 5 on current collector stripes 7, which are the first two layers in the energy storage device, are shown in Fig. 1; the cathode stripes define individual cells of an energy storage device. Alternatively, the energy storage device may be formatted as rows of smaller energy storage device cells. For example, cathode areas 6 on current collector stripes 7 are also shown in Fig. 1; the cathode areas define individual cells of an energy storage device. See below for a fuller description of the structure of energy storage devices. Clearly, energy storage devices may have a wide variety of different formats and the embodiments of the present invention are not limited to the formats shown in Fig.1.

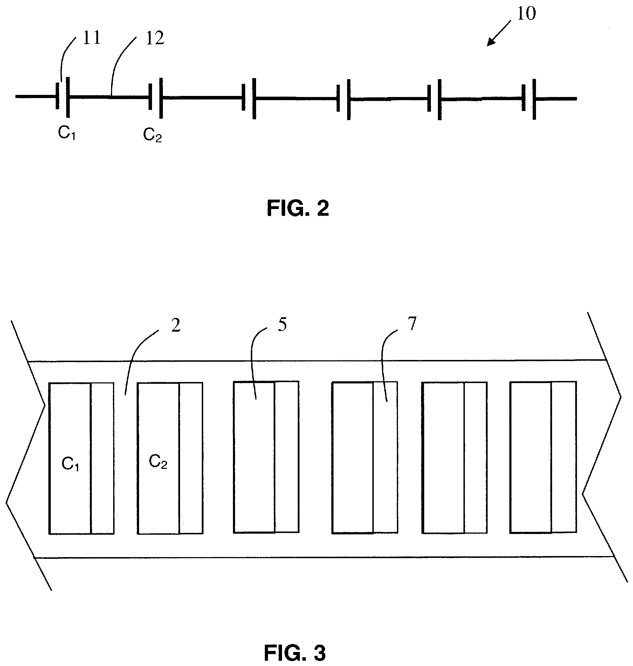

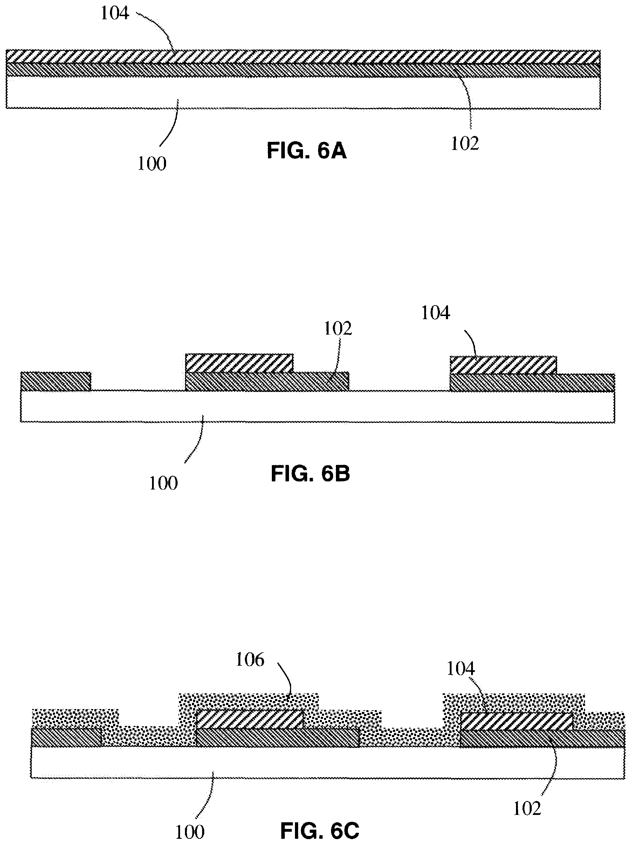

Figure 2 is a schematic diagram of battery cells 11, electrically connected in series. A series chain 10 of battery cells 11, where the battery cells are referred to as C₁, C₂, ... , are connected in series by electrical connectors 12. As is well known, such chains 10 of battery cells 11 provide an output voltage which is a sum of the voltages across the individual battery cells 11. Figure 3 shows a representation of battery cells with a "stripe" format on a large area substrate 2 which correspond to the schematic diagram of Fig. 2, according to some embodiments of the invention. The cathode stripes 5 represent the general format and layout of the cells; more details of the cell structure and the way in which they are connected electrically in series are provided, by way of example, in the cross-sectional illustrations of Figs. 6A-6H. The stripes 5 correspond to the patterned cathode in Figs. 6B-6H. In Fig. 3, the cells are defined by the stripes 5 and extend across the width of the substrate 2. The substrate 2 may be a flexible large area substrate, suitable for reel to reel processing.

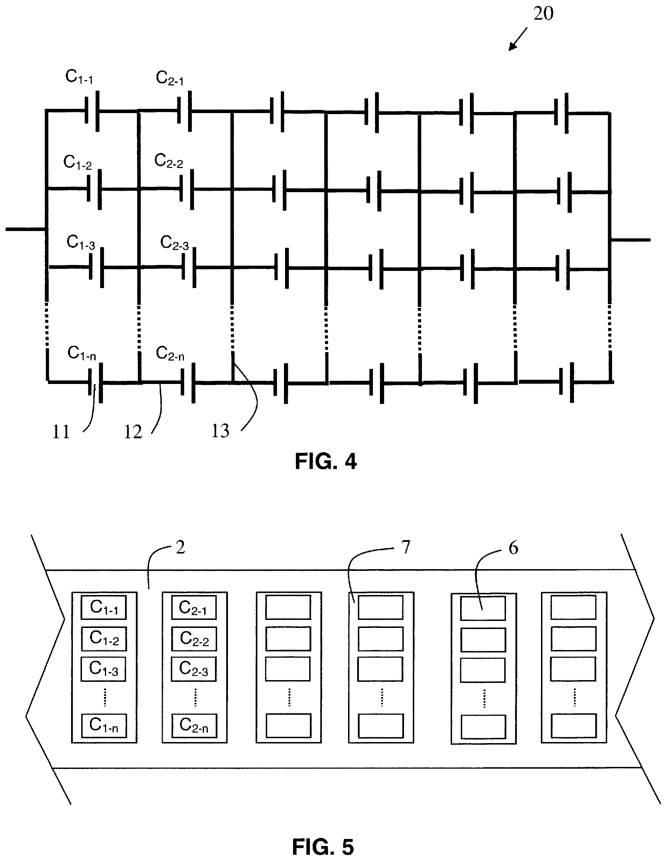

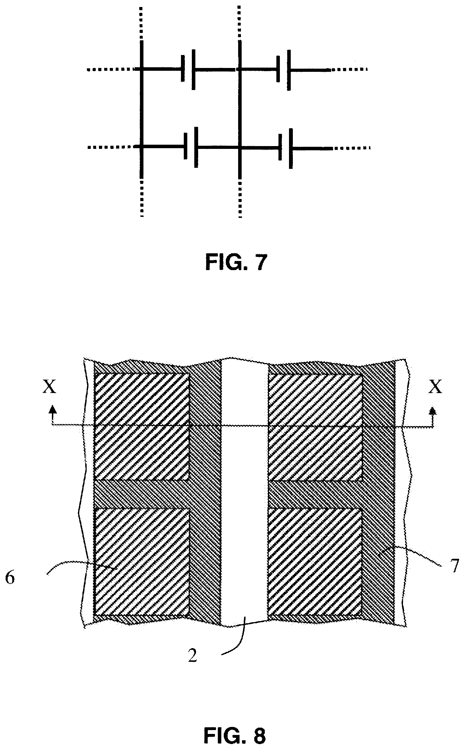

In order to reduce the impact of cell capacity differences, embodiments of the present invention may include a network 20 of battery cells 11 which are electrically connected together both in series and in parallel, as shown schematically in Figure 4. In Fig. 4, an array 20 of battery cells 11, where the battery cells are referred to as Cₘ₋ₙ where m refers to the column and n refers to the row, is shown connected in both series and in parallel by connectors 12 and 13. Figure 5 shows a representation of an array of battery cells with a format on a large area substrate 2 which corresponds to the schematic diagram of Fig. 4, according to some embodiments of the invention. The cathode areas 6 represent the general format and layout of the cells - on each current collector stripe 7 there are n cathode areas 6, where the cathode areas 6 define the cells of an energy storage device. More details of the way in which the cells are connected electrically in series and in parallel are provided, by way of example, in Fig. 8 and Figs. 6A-6H.

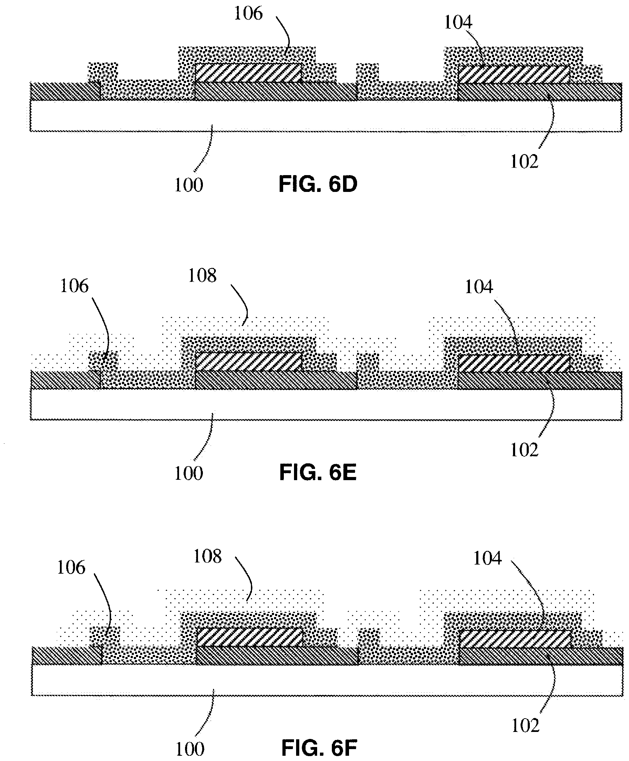

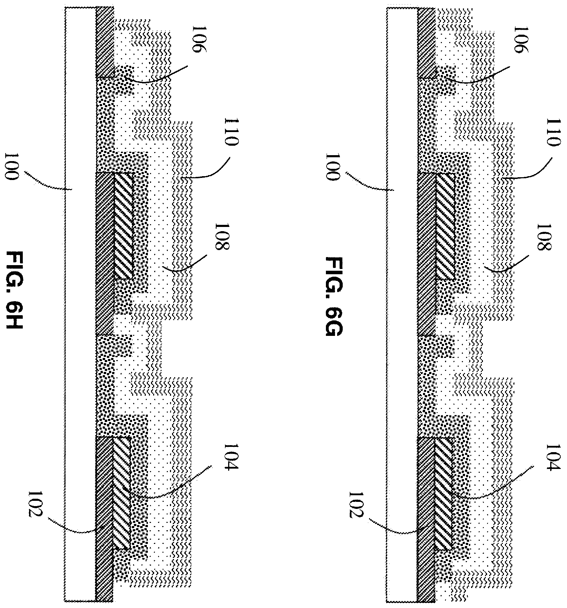

Figures 6A-6H illustrate a fabrication process for an energy storage device, according to some embodiments of the invention. The particular embodiment shown in Figs. 6A-6H is a multiplicity of battery cells on a single substrate. A current collector 102 and then a cathode 104 (also referred to herein as a first electrode) are deposited on a substrate 100, to provide the structure shown in Fig. 6A. The current collector 102 and cathode 104 are patterned using well known lithographic techniques, to provide the structure shown in Fig. 6B. The current collector has been patterned to form a multiplicity of current collector stripes - for example, see the current collector stripes 7 in Figs. 1, 3 and 5. The cathode has been patterned to form a multiplicity of cathode structures. The cathode structures may be cathode stripes 5, as shown in Figs. 1 and 3, or cathode areas 6, as shown in Figs. 1, 5 and 8. An electrolyte 106 is deposited over the patterned current collector and cathode, to provide the structure shown in Fig. 6C. The electrolyte 106 is then patterned using well known lithographic techniques, to provide the structure shown in Fig. 6D. The patterned gaps in the electrolyte 106 are for making electrical contact to the patterned current collector 102. An anode 108 (also referred to herein as a second electrode) is deposited over the patterned electrolyte, and makes electrical contact to the current collector 102 through the gaps in the patterned electrolyte 106, to provide the structure shown in Fig. 6E. The anode 108 is patterned using well known lithographic techniques in order to provide cell isolation, as shown in Fig. 6F. A final protective coating 110 is deposited, to provide the structure shown in Fig. 6G. The final protective coating 110 is patterned using well known lithographic techniques to provide gaps in the protective coating to allow external electrical contact to the series chain of battery cells, as shown in Fig. 6H. Note that herein "well-known lithographic techniques" covers a wide range of lithographic techniques known in the industry, including photolithography, resist-based techniques, resistless techniques such as laser-based patterning, etc.

In some embodiments of the present invention, the layer 108 may include both an anode and a protective coating for the underlying anode layer - the anode would be deposited first, and the protective coating second. For example, if the anode is a reactive metal such as lithium, then a protective coating is required if the structure is to be exposed to air for patterning. The protective coating may include blanket deposition of metals and dielectrics. Examples of potentially suitable metals are Cu, Ti and Al. Suitable dielectric oxides would need to be stable in contact with the anode. Furthermore, the protective coating may also be an anode current collector. The patterning of layer 108, for this embodiment, is the same as described above.

In further embodiments of the present invention, the layer 108 may include both an anode and an anode current collector - the anode would be deposited first, and the anode current collector second. The patterning of layer 108, for this embodiment is the same as described above.

Figure 7 shows a detail of the battery cell network of Fig. 4, and Figure 8 shows a top view of the patterned current collector 102 and cathode layer 104 corresponding to the structure of Fig. 7. Fig. 8 shows the cathode areas 6 for four energy storage cells. The current collector, which is patterned in stripes 7, as seen in Fig. 8, provides the parallel connection between individual cells. Note that the cross-sectional plane X-X in Fig. 8 is the same as the cross-sectional plane of Figs. 6A-6H. Furthermore, the cross-section X-X is the same as the two cells shown in cross-section in Fig. 6B.

Figure 9 shows a version of Fig. 6H in which the series electrical connection of energy storage device cells, such as battery cells, is clearly indicated. A first energy storage device cell comprises a first current collector 910, a first cathode 912, a first electrolyte 914 and a first anode 916. A second energy storage device comprises a second current collector 920, a second cathode 922, a second electrolyte 924 and a second anode 926. External electrical connection to the energy storage device is made through electrical leads 904 and 908. Electrical lead 904 is connected to a first pad 902 and electrical lead 908 is connected to the second current collector 920. Series connection of the cells is as follows: the first anode 916 is connected to the first pad 902, the first current collector 910 is connected to the second anode 926, and the second current collector 920 is connected to the electrical lead 908. The example given in Fig. 9 shows two cells; however, any number of cells may be connected together in series, as indicated in Figs. 2 and 4.

Referring again to Figs. 3, 5, 6A-6H and 8, the energy storage device cells may include the cathode stripes or cathode area electrodes. For example, an energy storage device cell may include a current collector stripe, the corresponding cathode stripe, the corresponding anode stripe, and the corresponding portion of electrolyte layer. The current collector stripe, cathode stripe and anode stripe may be mutually parallel. Alternatively, an energy storage device may include a cathode area electrode, the corresponding portion of current collector stripe, the corresponding portion of anode stripe, and the corresponding portion of electrolyte layer. In this latter embodiment, the cathode area electrodes may be arranged in a row where the row is parallel to the current collector stripe and the anode stripe.

The energy storage devices may be packaged in different formats. For example, energy storage devices on flexible substrates may be rolled into cylinders. Alternatively, energy storage devices may be stacked, and the stacked devices may be electrically connected together, either serially and/or in parallel. Furthermore, energy storage devices may be stacked and then rolled. Dimensions of typical packaged devices may vary from millimeter up to meter scale. The energy storage devices are suitable for a very wide range of applications, including applications requiring one or more of high power, high energy, and high voltage (multiples of single cell voltage). Note that the voltage per cell for a typical thin film battery may be expected to be around 3 to 5 V, and connecting these cells in series may allow much higher voltages to be achieved.

Embodiments of the energy storage devices described herein may be comprised of negative electrode (anode) materials with high charge capacity and high voltage tolerance, positive electrode (cathode) materials with high charge capacity, and electrolytes with high electrochemical stability. The positive electrode materials may include transition metal oxides, phosphates, fluorinated oxides and phosphates, and various mixtures thereof. Examples of metal oxide positive electrode materials are layered materials, such as LiCoO₂ and LiₙNiₓCo_{y}Al_{z}Oₘ, spinel materials such as LiMn₂O₄ and Co/Ni substituted Mn oxide, and olivine materials such as LiFePO₄. Examples of materials that have high voltage tolerance include LiCoPO₄ and LiNiPO₄, with open circuit voltages of ∼ 4.8 and 5.2V, respectively, with respect to a Li metal negative electrode. These materials also present high charge capacities of ∼ 170 mAh/gm.

High charge capacity negative electrode materials may include Si, Sn, Ge, Al, etc., which will form binary alloys with the ionic charge carrier, Li. The use of such materials offers the potential to eliminate the use of pure Li, which presents significant challenges and complexity in manufacturing. One of the biggest concerns about the alloy negative electrode materials is the potential for stress in the deposited electrode material resulting from large volume changes during charging (MLiₓ --> M + xLi) and discharging (M + xLi --> MLiₓ) cycles. The build-up of stress may be alleviated by using nano-structuring of the deposited layers in grain size, density or porosity, for example, to allow "breathing" of the negative electrode materials during these cycling events.

All of these positive and negative electrode materials may be used in fabricating energy storage devices. Various deposition methods, including standard vacuum deposition methods and non-vacuum deposition methods may be used. For vacuum deposition, PVD and CVD techniques may be used. For doping of the electrode materials, sputter deposition may be used with target materials with the desired composition. Alternatively, the electrode materials may be co-sputtered from several targets to form the correct composition, and, if needed, in a reactive environment. Such methods may be used to add a carbon coating as well. Modulation of the grain structure to achieve nano-structured or porous materials may be achieved by controlling the deposition processes. For example, low temperature deposition may be used to limit the diffusion kinetics and control the grain growth. Various non-vacuum deposition techniques may be used, including ink jet printing, spray coating, spin coating, etc., using appropriate ink, dispersion, and etc., with the desired material composition and grain structure already created prior to deposition.

Electrolytes are desired that have high ionic conductivity, low electrical conductivity and a high and broad electrochemical stability window. There are several candidate materials that may be used in embodiments of the energy storage devices. For vacuum deposited materials, lithium phosphorous oxynitride (LiPON) and variation thereof, lithium containing metal oxides like silicates, tantalates, and etc., and ternary combinations of LiO₂, P₂O₅ and P₂S₅. Suitable liquid (at room temperature) electrolyte candidates may be ionic liquids and molten salts with solvated Li salts.

Embodiments of the energy storage devices with large form factors may be fabricated using large-area coaters, such as coaters used in the flat panel display, glass coating and thin film solar photovoltaic industries. Large-area coating systems may be beneficial for scaling of production as well as being able to efficiently handle the product's large size and manufacturing worthy throughputs.

Figure 10 shows a schematic representation of a process line 1000 according to some embodiments of the present invention. The process line may be set-up as a linear processing system. Furthermore, the process line may be compatible with flexible thin film substrates and may use a reel-to-reel set-up such as shown in Fig. 1. The process line 1000 comprises multiple process tools 1010, such as deposition tools and patterning tools. The substrates/flexible substrate move through the process tools 1010 serially as indicated by the arrows. The process tools 1010 may be chosen to fabricate energy storage devices according to any of the methods described above. For example, the process tools 1010 may include:
deposition tools for depositing layers corresponding to a thin film energy storage device on a substrate, the layers including, in order of deposition, a current collector, a first electrode, an electrolyte and a second electrode; a first patterning tool to pattern the current collector; a second patterning tool to pattern the first electrode; and a third patterning tool to pattern the second electrode. Note that the order of process tools in the process line will be determined by the particular fabrication method being used.

Although the present invention has been particularly described with reference to certain embodiments thereof, it should be readily apparent to those of ordinary skill in the art that changes and modifications in the form and details may be made without departing from the spirit and scope of the invention. It is intended that the appended claims encompass such changes and modifications. The following claims define the present invention.

## Claims

1. A method of manufacturing an energy storage device, said energy storage device including a plurality of cells (11) integrated on a substrate (2, 100), said plurality of cells being electrically connected in serial and in parallel, said method comprising:
providing said substrate;
depositing layers corresponding to a thin film energy storage device on said substrate, said layers including, in order of deposition, a current collector (102), a first electrode (104), an electrolyte (106) and a second electrode (108);
patterning said current collector (102) to form a multiplicity of current collector stripes (7);
patterning said first electrode (104) to form a plurality of first area electrodes (6) on said multiplicity of current collector stripes (7), said plurality of first area electrodes being formed in a multiplicity of first area electrode rows, each of said multiplicity of first area electrode rows corresponding to a different one of said multiplicity of current collector stripes; and
patterning said second electrode (108) to form a multiplicity of second electrode stripes, each of said multiplicity of second electrode stripes corresponding to a different one of said plurality of first area electrodes (6), wherein the second electrode (108) is deposited over a patterned electrolyte, and makes electrical contact to the current collector (102) through the gaps in the patterned electrolyte (106);
wherein each of said plurality of cells (11) comprises one of said plurality of first area electrodes (6), and corresponding portions of current collector stripe (7), second electrode stripe, and electrolyte layer (106).

2. An energy storage device including:
a plurality of thin film cells (11) formed on a single substrate (2, 100), said plurality of cells being electrically connected in a network, said network including both parallel and serial electrical connections between individual cells of said plurality of cells, said plurality of cells comprising:
a multiplicity of current collector stripes (7) on the surface of said substrate, said multiplicity of current collector stripes being mutually parallel;
a plurality of first cell electrodes (6) on said multiplicity of current collector stripes, said plurality of first cell electrodes corresponding to said plurality of cells;
a multiplicity of second electrode stripes over said plurality of first cell electrodes (6), said multiplicity of second electrode stripes being parallel to said multiplicity of current collector stripes (7); and
an electrolyte layer (106) between said plurality of first cell electrodes (6) and said multiplicity of second electrode stripes, wherein the second electrode (108) is deposited over a patterned electrolyte, and makes electrical contact to the current collector (102) through the gaps in the patterned electrolyte (106).

3. An energy storage device as in claim 2, wherein said multiplicity of current collector stripes (7) provide parallel electrical connection of said plurality of cells (11).

4. An energy storage device as in claim 2, wherein said plurality of cells (11) comprises rows of cells, and wherein said rows of cells are electrically connected in series with each other.

5. An energy storage device as in claim 4, wherein a first one of said rows of cells and a second one of said rows of cells are electrically connected in series by the current collector stripe (7) corresponding to said first one of said rows of cells being electrically in contact to the second electrode stripe corresponding to said second one of said rows of cells, and wherein said first one of said rows of cells is adjacent to said second one of said rows of cells on said substrate (2, 100).

6. A method of manufacturing an energy storage device, said energy storage device including a multiplicity of cells (11) integrated on a substrate (2, 100), said multiplicity of cells being electrically connected in serial, said method comprising:
providing said substrate;
depositing layers corresponding to a thin film energy storage device on said substrate, said layers including, in order of deposition, a current collector (102), a first electrode (104), an electrolyte (106) and a second electrode (108);
patterning said current collector to form a multiplicity of current collector stripes (7);
patterning said first electrode to form a multiplicity of first electrode stripes (5), each of said first electrode stripes being on top of a corresponding one of said multiplicity of current collector stripes; and
patterning said second electrode to form a multiplicity of second electrode stripes, each of said multiplicity of second electrode stripes corresponding to one of said multiplicity of first electrode stripes (5), wherein the second electrode (108) is deposited over a patterned electrolyte, and makes electrical contact to the current collector (102) through the gaps in the patterned electrolyte (106);
wherein each of said multiplicity of electrically connected cells (11) comprises one of said multiplicity of current collector stripes (7), said corresponding one of said multiplicity of first electrode stripes (5), said corresponding one of said multiplicity of second electrode stripes, and a corresponding portion of the layer of said electrolyte (106).

7. A method as in claim 6, wherein said multiplicity of current collector stripes (7), said multiplicity of first electrode stripes (5) and said multiplicity of second electrode stripes are mutually parallel.

8. A method as in claim 6, wherein said multiplicity of cells (11) are configured in a serial chain of cells (10), and wherein the current collector stripe (7) corresponding to one of said multiplicity of cells is electrically connected to the second electrode stripe corresponding to the cell adjacent to said one of said multiplicity of cells.

9. An energy storage device including:
a multiplicity of thin film cells (11) formed on a single substrate (2, 100), said multiplicity of cells being electrically connected in series, each one of said multiplicity of cells comprising:
a current collector (102) on the surface of said substrate;
a first electrode (104) on said current collector;
a second electrode (108) over said first electrode; and
an electrolyte layer (106) between said first electrodes and said second electrode, wherein the second electrode (108) is deposited over a patterned electrolyte, and makes electrical contact to the current collector (102) through the gaps in the patterned electrolyte (106).

10. An energy storage device as in claim 9, wherein the multiplicity of current collectors (102) are configured in parallel stripes (7), wherein the multiplicity of second electrodes (108) are configured in parallel stripes, and wherein the multiplicity of current collectors are configured parallel to the multiplicity of second electrodes.

11. An energy storage device as in claim 10, wherein the multiplicity of first electrodes (104) are configured in parallel stripes (5), and wherein the multiplicity of first electrodes are configured parallel to the multiplicity of current collectors.

12. An energy storage device as in claim 9, wherein a first one of said multiplicity of cells and a second one of said multiplicity of cells are electrically connected in series by the current collector stripe (7) corresponding to said first one of said cells being electrically contacted to the second electrode stripe corresponding to said second one of said cells, and wherein said first one of said cells is adjacent to said second one of said cells on said substrate (2, 100).

## Patentansprüche

1. Verfahren zur Herstellung einer Energiespeichervorrichtung, wobei die Energiespeichervorrichtung mehrere Zellen (11), die auf einem Substrat (2, 100) integriert sind, beinhaltet, wobei die mehreren Zellen elektrisch in Reihe und parallel geschaltet sind, wobei das Verfahren Folgendes umfasst:
Bereitstellen des Substrats;
Abscheiden von Schichten, die einer Dünnschicht-Energiespeichervorrichtung entsprechen, auf dem Substrat, wobei die Schichten, in der Reihenfolge der Abscheidung, einen Stromkollektor (102), eine erste Elektrode (104), einen Elektrolyt (106) und eine zweite Elektrode (108) beinhalten;
Mustern des Stromkollektors (102) zum Bilden einer Vielzahl von Stromkollektorstreifen (7);
Mustern der ersten Elektrode (104) zum Bilden mehrerer erster Flächenelektroden (6) auf der Vielzahl von Stromkollektorstreifen (7), wobei die mehreren ersten Flächenelektroden in einer Vielzahl erster Flächenelektrodenreihen gebildet sind, wobei jede der Vielzahl erster Flächenelektrodenreihen einem unterschiedlichen der Vielzahl von Stromkollektorstreifen entspricht; und
Mustern der zweiten Elektrode (108) zum Bilden einer Vielzahl zweiter Elektrodenstreifen, wobei jeder der Vielzahl zweiter Elektrodenstreifen einer unterschiedlichen der mehreren ersten Flächenelektroden (6) entspricht, wobei die zweite Elektrode (108) über einem gemusterten Elektrolyt abgeschieden ist und durch die Spalten in dem gemusterten Elektrolyt (106) in elektrischem Kontakt mit dem Stromkollektor (102) steht;
wobei jede der mehreren Zellen (11) eine der mehreren ersten Flächenelektroden (6) und entsprechende Abschnitte des Stromkollektorstreifens (7), des zweiten Elektrodenstreifens und der Elektrolytschicht (106) umfasst.

2. Energiespeichervorrichtung, welche Folgendes beinhaltet: mehrere Dünnschichtzellen (11), die auf einem einzelnen Substrat (2, 100) gebildet sind, wobei die mehreren Zellen elektrisch in einem Netzwerk geschaltet sind, wobei das Netzwerk sowohl elektrische Parallelschaltung als auch elektrische Reihenschaltung zwischen einzelnen Zellen der mehreren Zellen beinhaltet, wobei die mehreren Zellen Folgendes umfassen:
eine Vielzahl von Stromkollektorstreifen (7) auf der Oberfläche des Substrats, wobei die Vielzahl von Stromkollektorstreifen parallel zueinander sind;
mehrere erste Zellelektroden (6) auf der Vielzahl von Stromkollektorstreifen, wobei die mehreren ersten Zellelektroden den mehreren Zellen entsprechen;
eine Vielzahl zweiter Elektrodenstreifen über den mehreren ersten Zellelektroden (6), wobei die Vielzahl zweiter Elektrodenstreifen parallel zu der Vielzahl von Stromkollektorstreifen (7) ist; und
eine Elektrolytschicht (106) zwischen den mehreren ersten Zellelektroden (6) und der Vielzahl zweiter Elektrodenstreifen, wobei die zweite Elektrode (108) über einem gemusterten Elektrolyt abgeschieden ist und durch die Spalten in dem gemusterten Elektrolyt (106) in elektrischem Kontakt mit dem Stromkollektor (102) steht.

3. Energiespeichervorrichtung nach Anspruch 2, wobei die Vielzahl von Stromkollektorstreifen (7) eine elektrische Parallelschaltung der mehreren Zellen (11) bereitstellt.

4. Energiespeichervorrichtung nach Anspruch 2, wobei die mehreren Zellen (11) Reihen von Zellen umfassen und wobei die Reihen von Zellen elektrisch miteinander in Reihe geschaltet sind.

5. Energiespeichervorrichtung nach Anspruch 4, wobei eine erste der Reihen von Zellen und eine zweite der Reihen von Zellen durch den Stromkollektorstreifen (7) elektrisch in Reihe geschaltet sind, wodurch die erste der Reihen von Zellen elektrisch in Kontakt mit dem zweiten Elektrodenstreifen steht, welcher der zweiten der Reihen von Zellen entspricht, und wobei die erste der Reihen von Zellen neben der zweiten der Reihen von Zellen auf dem Substrat (2, 100) liegt.

6. Verfahren zur Herstellung einer Energiespeichervorrichtung, wobei die Energiespeichervorrichtung eine Vielzahl von Zellen, die (11) auf einem Substrate (2, 100) integriert sind, beinhaltet, wobei die Vielzahl von Zellen elektrisch in Reihe geschaltet sind, wobei das Verfahren Folgendes umfasst:
Bereitstellen des Substrats;
Abscheiden von Schichten, die einer Dünnschicht-Energiespeichervorrichtung entsprechen, auf dem Substrat, wobei die Schichten, in der Reihenfolge der Abscheidung, einen Stromkollektor (102), eine erste Elektrode (104), einen Elektrolyt (106) und eine zweite Elektrode (108) beinhalten;
Mustern des Stromkollektors zum Bilden einer Vielzahl von Stromkollektorstreifen (7);
Mustern der ersten Elektrode zum Bilden einer Vielzahl erster Elektrodenstreifen (5), wobei sich jeder der ersten Elektrodenstreifen oben auf einem entsprechenden der Vielzahl von Stromkollektorstreifen befindet; und
Mustern der zweiten Elektrode zum Bilden einer Vielzahl zweiter Elektrodenstreifen, wobei jeder der Vielzahl zweiter Elektrodenstreifen einem der Vielzahl erster Elektrodenstreifen (5) entspricht, wobei die zweite Elektrode (108) über einem gemusterten Elektrolyt abgeschieden ist und durch die Spalten im gemusterten Elektrolyt (106) in elektrischem Kontakt mit dem Stromkollektor (102) steht;
wobei jede der Vielzahl elektrisch verbundener Zellen (11) einen der Vielzahl von Stromkollektorstreifen (7), den entsprechenden der Vielzahl erster Elektrodenstreifen (5), den entsprechenden der Vielzahl zweiter Elektrodenstreifen und einen entsprechenden Abschnitt der Schicht des Elektrolyts (106) umfasst.

7. Verfahren nach Anspruch 6, wobei die Vielzahl von Stromabnehmerstreifen (7), die Vielzahl erster Stromkollektorstreifen (5) und die Vielzahl zweiter Elektrodenstreifen parallel zueinander sind.

8. Verfahren nach Anspruch 6, wobei die Vielzahl von Zellen (11) in einer Kette von Zellen (10) in Reihe konfiguriert ist und wobei der Stromkollektorstreifen (7), der einer der Vielzahl von Zellen entspricht, elektrisch mit dem zweiten Elektrodenstreifen, welcher der Zelle neben der einen der Vielzahl von Zellen entspricht, verbunden ist.

9. Energiespeichervorrichtung, welche Folgendes beinhaltet:
eine Vielzahl von Dünnschichtzellen (11), die auf einem einzelnen Substrat (2, 100) gebildet sind, wobei die Vielzahl von Zellen elektrisch in Reihe geschaltet ist, wobei jede der Vielzahl von Zellen Folgendes umfasst:
einen Stromkollektor (102) auf der Oberfläche des Substrats;
eine erste Elektrode (104) auf dem Stromkollektor;
eine zweite Elektrode (108) über der ersten Elektrode; und
eine Elektrolytschicht (106) zwischen der ersten Elektrode und der zweiten Elektrode, wobei die zweite Elektrode (108) über einem gemusterten Elektrolyt abgeschieden ist und durch die Spalten in dem gemusterten Elektrolyt (106) in elektrischem Kontakt mit dem Stromkollektor (102) steht.

10. Energiespeichervorrichtung nach Anspruch 9, wobei die Vielzahl von Stromkollektoren (102) in parallelen Streifen (7) konfiguriert ist, wobei die Vielzahl zweiter Elektroden (108) in parallelen Streifen konfiguriert ist und wobei die Vielzahl von Stromkollektoren parallel zu der Vielzahl zweiter Elektroden konfiguriert ist.

11. Energiespeichervorrichtung nach Anspruch 10, wobei die Vielzahl erster Elektroden (104) in parallelen Streifen (5) konfiguriert ist und wobei die Vielzahl erster Elektroden parallel zu der Vielzahl von Stromkollektoren konfiguriert ist.

12. Energiespeichervorrichtung nach Anspruch 9, wobei eine erste der Vielzahl von Zellen und eine zweite der Vielzahl von Zellen durch den Stromkollektor streifen (7) elektrisch in Reihe geschaltet sind, wodurch die erste der Zellen in elektrischem Kontakt mit dem zweiten Elektrodenstreifen steht, welcher der zweiten der Zellen entspricht, und wobei die erste der Zellen neben der zweiten der Zellen auf dem Substrat (2, 100) liegt.

## Revendications

1. Procédé de fabrication d'un dispositif de stockage d'énergie, ledit dispositif de stockage d'énergie comprenant une pluralité de cellules (11) intégrées sur un substrat (2, 100), ladite pluralité de cellules étant raccordées électriquement en série et en parallèle, ledit procédé comprenant :
la fourniture dudit substrat ;
le dépôt de couches correspondant à un dispositif de stockage d'énergie à film mince sur ledit substrat, lesdites couches comprenant, par ordre de dépôt, un collecteur de courant (102), une première électrode (104), un électrolyte (106) et une deuxième électrode (108) ;
la structuration dudit collecteur de courant (102) pour former une multiplicité de bandes de collecteur de courant (7) ;
la structuration de ladite première électrode (104) pour former une pluralité de premières électrodes de zone (6) sur ladite multiplicité de bandes de collecteur de courant (7), ladite pluralité de premières électrodes de zone étant formées dans une multiplicité de premières rangées d'électrodes de zone, chacune de ladite multiplicité de premières rangées d'électrodes de zone correspondant à l'une différente de ladite multiplicité de bandes de collecteur de courant ; et
la structuration de ladite deuxième électrode (108) pour former une multiplicité de deuxièmes bandes d'électrode, chacune de ladite multiplicité de deuxièmes bandes d'électrode correspondant à l'une différente de ladite pluralité de premières électrodes de zone (6), dans lequel la deuxième électrode (108) est déposée sur un électrolyte structuré, et établit un contact électrique avec le collecteur de courant (102) à travers les espacements dans l'électrolyte structuré (106) ;
dans lequel chacune de ladite pluralité de cellules (11) comprend l'une de ladite pluralité de premières électrodes de zone (6), et des portions correspondantes d'une bande de collecteur de courant (7), d'une deuxième bande d'électrode, et d'une couche d'électrolyte (106).

2. Dispositif de stockage d'énergie comprenant :
une pluralité de cellules à film mince (11) formées sur un substrat unique (2, 100), ladite pluralité de cellules étant raccordées électriquement dans un réseau, ledit réseau comprenant des raccordements électriques en parallèle et en série entre des cellules individuelles de ladite pluralité de cellules, ladite pluralité de cellules comprenant :
une multiplicité de bandes de collecteur de courant (7) sur la surface dudit substrat, ladite multiplicité de bandes de collecteur de courant étant réciproquement parallèles ;
une pluralité de premières électrodes de cellules (6) sur ladite multiplicité de bandes de collecteur de courant, ladite pluralité de premières électrodes de cellules correspondant à ladite pluralité de cellules ;
une multiplicité de deuxièmes bandes d'électrode sur ladite pluralité de premières électrodes de cellules (6), ladite multiplicité de deuxièmes bandes d'électrode étant parallèles à ladite multiplicité de bandes de collecteur de courant (7) ; et
une couche d'électrolyte (106) entre ladite pluralité de premières électrodes de cellules (6) et ladite multiplicité de deuxièmes bandes d'électrode, dans lequel la deuxième électrode (108) est déposée dessus un électrolyte structuré, et établit un contact électrique avec le collecteur de courant (102) à travers les espacements dans l'électrolyte structuré (106).

3. Dispositif de stockage d'énergie selon la revendication 2, dans lequel ladite multiplicité de bandes de collecteur de courant (7) fournissent un raccordement électrique parallèle de ladite pluralité de cellules (11).

4. Dispositif de stockage d'énergie selon la revendication 2, dans lequel ladite pluralité de cellules (11) comprend des rangées de cellules, et dans lequel lesdites rangées de cellules sont raccordées électriquement en série l'une à l'autre.

5. Dispositif de stockage d'énergie selon la revendication 4, dans lequel une première desdites rangées de cellules et une deuxième desdites rangées de cellules sont électriquement raccordées en série par la bande de collecteur de courant (7) correspondant à ladite première desdites rangées de cellules étant électriquement en contact avec la deuxième bande d'électrode correspondant à ladite deuxième desdites rangées de cellules, et dans lequel ladite première desdites rangées de cellules est adjacente à ladite deuxième desdites rangées de cellules sur ledit substrat (2, 100).

6. Procédé de fabrication d'un dispositif de stockage d'énergie, ledit dispositif de stockage d'énergie comprenant une multiplicité de cellules (11) intégrées sur un substrat (2, 100), ladite multiplicité de cellules étant raccordées électriquement en série, ledit procédé comprenant :
la fourniture dudit substrat ;
le dépôt de couches correspondant à un dispositif de stockage d'énergie à film mince sur ledit substrat, lesdites couches comprenant, par ordre de dépôt, un collecteur de courant (102), une première électrode (104), un électrolyte (106) et une deuxième électrode (108) ;
la structuration dudit collecteur de courant pour former une multiplicité de bandes de collecteur de courant (7) ;
la structuration de ladite première électrode pour former une multiplicité de premières bandes d'électrode (5), chacune desdites premières bandes d'électrode étant dessus l'une correspondante de ladite multiplicité de bandes de collecteur de courant ; et
la structuration de ladite deuxième électrode pour former une multiplicité de deuxièmes bandes d'électrode, chacune de ladite multiplicité de deuxièmes bandes d'électrode correspondant à l'une de ladite multiplicité de premières bandes d'électrode (5), dans lequel la deuxième électrode (108) est déposée sur un électrolyte structuré, et établit un contact électrique avec le collecteur de courant (102) à travers les espacements dans l'électrolyte structuré (106) ;
dans lequel chacune de ladite multiplicité de cellules raccordées électriquement (11) comprend l'une de ladite multiplicité de bandes de collecteur de courant (7), ladite une correspondante de ladite multiplicité de premières bandes d'électrode (5), ladite une correspondante de ladite multiplicité de deuxièmes bandes d'électrode, et une portion correspondante de la couche dudit électrolyte (106).

7. Procédé selon la revendication 6, dans lequel ladite multiplicité de bandes de collecteur de courant (7), ladite multiplicité de premières bandes d'électrode (5) et ladite multiplicité de deuxièmes bandes d'électrode sont réciproquement parallèles.

8. Procédé selon la revendication 6, dans lequel ladite multiplicité de cellules (11) sont configurées dans une chaîne en série de cellules (10), et dans lequel la bande de collecteur de courant (7) correspondant à l'une de ladite multiplicité de cellules est raccordée électriquement à la deuxième bande d'électrode correspondant à la cellule adjacente à ladite une de ladite multiplicité de cellules.

9. Dispositif de stockage d'énergie comprenant :
une multiplicité de cellules à film mince (11) formées sur un substrat unique (2, 100), ladite multiplicité de cellules étant raccordées électriquement en série, chacune de ladite multiplicité de cellules comprenant :
un collecteur de courant (102) sur la surface dudit substrat ;
une première électrode (104) sur ledit collecteur de courant ;
une deuxième électrode (108) dessus ladite première électrode ; et
une couche d'électrolyte (106) entre ladite première électrode et ladite deuxième électrode, dans lequel la deuxième électrode (108) est déposée dessus un électrolyte structuré, et établit un contact électrique avec le collecteur de courant (102) à travers les espacements dans l'électrolyte structuré (106).

10. Dispositif de stockage d'énergie selon la revendication 9, dans lequel la multiplicité de collecteurs de courant (102) sont configurés en bandes parallèles (7), dans lequel la multiplicité de deuxièmes électrodes (108) sont configurées en bandes parallèles, et dans lequel la multiplicité de collecteurs de courant sont configurés parallèlement à la multiplicité de deuxièmes électrodes.

11. Dispositif de stockage d'énergie selon la revendication 10, dans lequel la multiplicité de premières électrodes (104) sont configurées en bandes parallèles (5), et dans lequel la multiplicité de premières électrodes sont configurées parallèlement à la multiplicité de collecteurs de courant.

12. Dispositif de stockage d'énergie selon la revendication 9, dans lequel une première de ladite multiplicité de cellules et une deuxième de ladite multiplicité de cellules sont raccordées électriquement en série par la bande de collecteur de courant (7) correspondant à ladite première desdites cellules étant en contact électrique avec la deuxième bande d'électrode correspondant à ladite deuxième desdites cellules, et dans lequel ladite première desdites cellules est adjacente à ladite deuxième desdites cellules sur ledit substrat (2, 100).
